# EUROPEAN PATENT APPLICATION

(11) **EP 1 006 742 A1**
(43) Date of publication of application: **07.06.2000**
(21) Application number: 98123167.3
(22) Date of filing: 04.12.1998
(51) Int. Cl.: H04Q 7/30, H04Q 7/22

(54) **DSP platform for digital cellular mobile radio communication systems**

(71) Applicant: TELEFONAKTIEBOLAGET L M ERICSSON (publ), 126 25 Stockholm (SE)
(72) Inventor: Mahkonen, Arto, FIN-00950 Helsinki (FI)
(74) Representative: HOFFMANN - EITLE

(57) **Abstract**

To increase the applicability of digital signal processing platforms it is proposed to operate a digital signal processing platform under control of a control unit (22) adapted to operate the digital signal processing platform (14) in a first mode to access both a circuit-switched network (10) and a packet-switched network (12), or to operate the digital signal processing platform (14) in a second mode to access the circuit-switched network (12) only, or to operate the digital signal processing platform (14) in a third mode to access the packet-switched network (12), only.

## Description

### TECHNICAL FIELD OF THE INVENTION

The present invention relates to a digital signal processing DSP platform for digital cellular mobile radio communication systems, which is capable of implementing, e.g., a gateway between a packet-switched network and a circuit- switched network realized using downloadable DSP platform.

### TECHNICAL BACKGROUND OF THE INVENTION

In digital cellular mobile radio systems, digital signal processing DSP is widely used in different applications such as speech coding, echo cancellation, data adaptation, etc. Heretofore, a plurality of digital signal processing boards are provided to enable hardware support for such applications in view of the extremely high requirements to processing speed, internal data transfer and data storage, respectively.

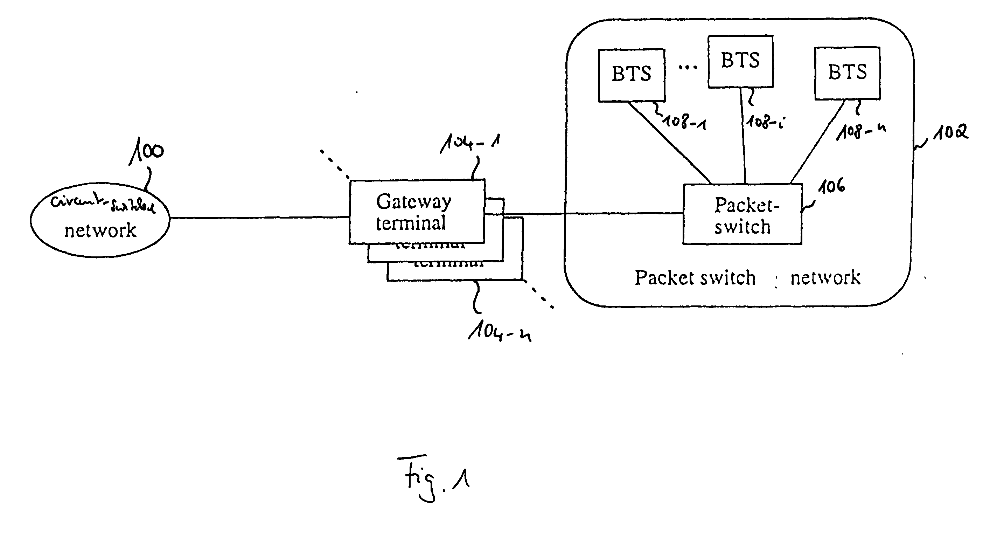

As shown in Fig. 1, data adaptation is provided for the transfer of data between a circuit-switched network 100 and a packet switch 102 in gateway terminals 104-1, ..., 104-n. Here, each gateway terminal 104-1, ..., 104-n receives circuit-switched data from the circuit-switched network 100 and executes a conversion to packet-switched data through the packet-switched network 102, or vice versa. Within the packet-switched network 102 a packet switch 106 then forwards the packet-switched data to base stations 108-1, ..., 108-n.

In the following, the terms "packet-switched data" and "packet-switched network" are used to refer to networks where data is transferred in the form of compact asynchronous packets that include also the address of the destination. One such example for a packet-switched network would be the asynchronous transfer mode ATM network.

Further, the term "circuit-switched network" is used to refer to synchronous networks where stream of data in one connection of, e.g., 64 kbit/s for pulse code modulation PCM, is identified through the position of a certain number of bits in synchronous time frame structures, e.g., 8 bits that are called time slot or octet. Within this method often being referred to as Time Division Multiple Access TDMA the data stream does not include any address information but nevertheless synchronous switches may route individual data streams as their constant positions in the continuous stream of time frames are known. The actual switching consists of switching position sensitive bit packets between different time frame structures where switching is controlled by outband signalling. This kind of data transfer is often referred to as Synchronous Transfer Mode STM. One example would be PCM-based Public Switched Telephony Network PSTN. In circuit-switched networks the seized connection allocates a constant transfer bandwidth, e.g., 64 kbit/s in the PCM network, for the whole seizure time independently of how much of the reserved bandwidth is actually used. Typically, uncoded speech traffic is a good candidate for synchronous circuit-switched networks using PCM techniques. To the contrary, in packet network the used bandwidth of a connection varies during its seizure time according to the amount of effective data which is actually transferred. One such example would be that during silence periods speech packets are more seldomly transferred and/or that such speech packets are shorter than during speech bursts. One example for the use of a packet switch 106 with respect to base stations 108-1, ..., 108-n is a wide-band CDMA network.

While in Fig. 1 the gateway terminals 104-1 to 104-n are shown as being arranged between the circuit-switched network 100 and the packet-switched network 102 it may be easily included in either of these networks. If they are included in the packet-switched network 102, their internal interfaces are oriented towards the packet switch 106 and their external open interface are oriented towards the circuit-switched network, e.g., the PCM-based PSTN network.

To the contrary, if the gateway terminals are included in the circuit-switched network 100 their internal interfaces are oriented towards the synchronous circuit switch (not shown in Fig. 1) and their external interfaces are oriented towards the packet-switched network 102.

Further, the gateway terminals 104-1, ..., 104-n may also be provided as stand alone node between different types of networks in which case all interfaces are open.

The gateway terminals in Fig. 1 are assumed to handle only the gateway related functions like conversions between circuit-switched format and packet-switched format together with necessary buffering. All the other DSP-functions like transcoding, echo cancelling etc. are assumed to be performed by other platforms located in either the circuit-switched or packet-switched networks.

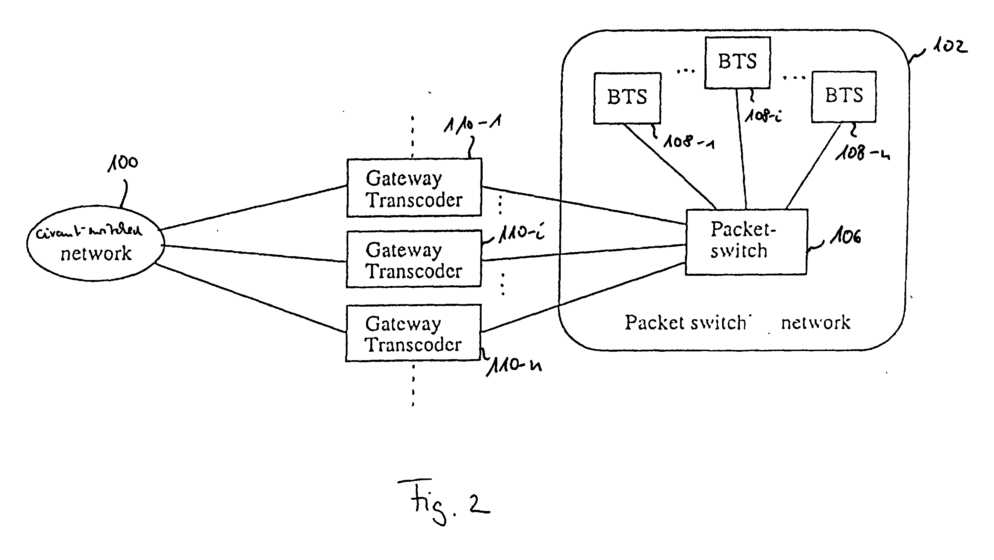

As already outlined above and shown in Fig. 2, another application for digital signal processing in digital cellular mobile radio systems is the transcoding of speech, e.g., the coding and the decoding of speech. In Fig. 2 those units having the same functionality as the units shown in Fig. 1 are denoted using the same reference numerals.

With respect to transcoding digital signal processing posesses potential interfaces to both the circuit-switched network wherein the speech is available in an uncoded format and the packet-switched network wherein the speech is available in coded format. However, typically in the state of the art transcoders both uncoded and coded speech is accessed via interface to a circuit-switched network only (like GSM, D-AMDS and PDC) or via interface to a packet-switched network only (like wide band CDMA). Further, transcoding is a function which inherently requires buffering of uncoded speech samples in both directions, i.e. from the base stations to the network and vice versa.

Due to this an extra buffering delay is introduced, if the gateway function and transcoding function are separated from each other like assumed in Fig. 1. Increasing the delay degrades the perceptual speech quality.

Therefore, as shown in Fig. 2 it has been proposed to combine the buffering required for the gateway functionality and the buffering required for the transcoding functionality into a single gateway transcoder 110-1, ..., 110-n, i.e. in WO 97/28664 and WO 97/37466 using such gateway transcoders the need for introducing extra delays due to the gateway functionality can be minimized.

However, a drawback with the gateway transcoder shown in Fig. 2 is that they are usually bound to a certain packet-switched network, e.g., ATM. In addition, gateway transcoders usually cannot be used in base station parts which are based on pure circuit-switching as in the GSM, D-AMPS or PDC standard where both coded and uncoded speech is transferred via synchronous switches. The same holds true for applications where the complete traffic is transferred via a packet switch like wide-band CDMA cellular systems. Both drawbacks consequently decrease the production series of the gateway transcoders and thus increase the overall system costs.

Another drawback in the state of the art gateway transcoder pointed out in WO 97/28664 and WO 97/37466 is the utilization of the data payload of standard data packets (like ATM-cells). Since the size of an ATM-cell is 53 bytes out of which 48 are used for payload, it does not match together with the number of bytes required by the parameters of one frame of coded speech. One frame of coded speech corresponds typically to a block of speech of a duration of 20 ms, which is equal to 160 uncoded speech samples.

A coded speech frame typically consists of 40 bytes (like GSM FR and EFR) or 20 bytes (like GSM HR). If coded speech of one frame is transferred exclusively by one ATM-cell, then the coded parameters can be transmitted immediately, when the coder has them available and the rest of the ATM-cell is padded with dummy bytes. In this case the delay is minimised, but transmission efficiency is wasted. In order not to waste transmission efficiency at least two coded speech frames shall share partially the same ATM-cell. In this case a frame cannot always be transferred completely, when it has been coded, but the sender has to wait for the next frame to be ready also before it is able to transmit the cell. This increases the buffering delay.

### SUMMARY OF THE INVENTION

In view of the above, the object of the invention is to increase the applicability of a digital signal processing platform with interfaces to both circuit-switched and packet-switched networks in digital cellular mobile radio systems.

According to the present invention this object is achieved through a digital signal processing platform for a digital cellular mobile radio system, comprising at least one digital signal processing means adapted to process digital data, internal data exchange means adapted to a bidirectional transfer of digital data between the digital signal processing means and a circuit-switched platform interface means provided for the exchange of circuit-switched digital data with the digital signal processing platform, and a bidirectional transfer of digital data between the digital signal processing means and a packet-switched platform interface means provided for the exchange of packet-switched digital data with the digital signal processing platform; and control means adapted to operate the digital signal processing platform in a first mode to access both a circuit-switched network and a packet-switched network, or to operate the digital signal processing platform in a second mode to access a circuit-switched network only, or to operate the digital signal processing platform in a third mode to access a packet-switched network, only.

Therefore, according to the present invention the digital signal processing platform can be used either as a plurality of gateway transcoders in the first mode, or as platform for many other applications in the second and third mode.

This widens the application area of the digital signal processing platform increasing the production series and thus decreasing the design, production and product administration costs as well as finally the total system costs seen both by the manufacturer and the end-user.

According to a preferred embodiment of the present invention at least two digital signal processing means execute a plurality of gateway mode, circuit-switched data mode, or packet-switched data mode applications concurrently under control of the control means.

The option to execute parallel processing in the digital signal processing platform allows to increase the operation efficiency thereof in either of the first, second, and third mode, respectively.

According to yet another preferred embodiment of the present invention the digital signal processing platform further comprises a memory means storing embedded digital signal processing programs executed by the digital signal processing means in the gateway mode, circuit-switched data mode, and/or packet-switched data mode, and that embedded digital signal processing programs are updated in the memory means under control of the control means on remote demand.

The concept of embedded programs which are downloaded to the digital signal processing platform on demand, too, increases the range of applications as this feature allows for a much more facilitated maintenance of equipment using the digital signal processing platform. In other words, the external supply of data allows to adapt the functionality of the digital signal processing platform also after initial installation thereof.

According to yet another preferred embodiment of the present invention the digital signal processing platform further comprises a control platform interface means provided for the exchange of externally supplied control data with the control means.

The option to externally supply control data facilitates the maintenability of the digital signal processing platform since different operation modes thereof can easily be adapted to newly arising requirements not being available at the first installation of the digital signal processing platform.

According to yet another preferred embodiment of the present invention the internal data exchange means in the digital signal processing platform comprises an on-board high bandwidth packet based bus with variable packet sizes and the packet-switched platform interface means, too, being adapted to variable packet sizes.

The variable packet size as well as the traffic band width allocated to a digital signal processing platform may be controlled through the downloadable on-board embedded software which yields possibilities to connect the board together with a plurality of packet-switches and to save switch capacity when using different algorithms requiring different amount of digital signal processing capacity.

Therefore, according to the present invention variable packet sizes are not only used for the exchange of data from the outside to the digital signal processing platform but also for the exchange of data on an on-board level. Thus, the extra buffering delay required for conversions between synchronous circuit-switched and asynchronous packet-switched data streams may be minimized.

In particular, if customer-specific packet switches with variable packet size, e.g., MiniCell switches are available, the extra delay may be minimized without wasting transmission capacity. Here, the only extra delay required is caused by the buffering on the receiver side to take into account the packet transmission delay and the jitter in it because of traffic load fluctuations.

Nevertheless, if the physical bandwidth is dimensioned properly and speech packets may be transferred with prioritized real-time protocol, the transmission time cannot be higher than that of coded traffic frame in an ordinary circuit-switched base station subsystem which is typically 20 ms.

Similar advantages as outlined above may be achieved through the digital signal processing method for digital cellular mobile radio system according to the present invention.

### DESCRIPTION OF THE DRAWING

Preferred embodiments of the present invention will, by way of example, be described in the following under reference to the drawing in which:
- Fig. 1: shows the use of gateway terminals to connect circuit-switched networks and packet-switched networks together according to the technical background of the present invention;
- Fig.2: shows the use of gateway transcoders to connect a circuit-switched network and a packet-switched networks together via transcoding according to the technical background of the present invention;
- Fig. 3: shows the concept of a digital signal processing platform according to the present invention that may be used as a gateway transcoder or solely within circuit-switched and packet-switched networks;
- Fig. 4: shows an overall basic block diagram for the digital signal processing platform according to the present invention;
- Fig. 5: shows a first specific block diagram according to the basic block diagram shown in Fig. 4;
- Fig. 6: shows a second specific block diagram according to the basic block diagram shown in Fig. 4;
- Fig. 7: shows a third specific block diagram according to the basic block diagram shown in Fig. 4;
- Fig. 8: shows a fourth specific block diagram according to the basic block diagram shown in Fig. 4.

### DESCRIPTION OF PREFERRED EMBODIMENTS

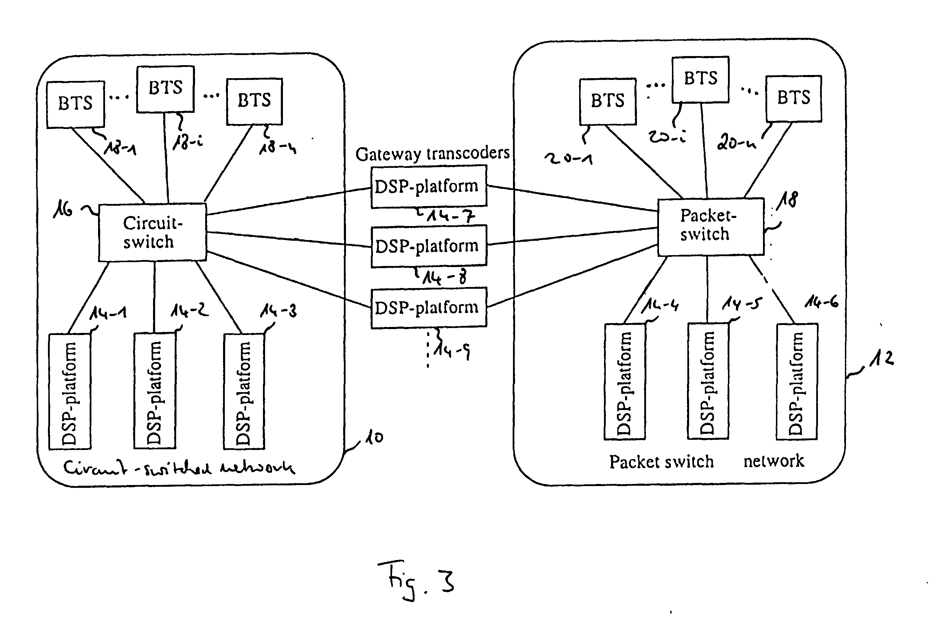

Fig. 3 shows the concept of a digital signal processing platform which may be either used as, e.g., gateway transcoder or as a platform for applications exclusively in circuit-switched networks or packet-switched networks.

In particular, Fig. 3 shows a circuit-switched network 10 on the one side and a packet-switched network 12 on the other side. In either circuit-switched or packet-switched network as well as in between there are, provided a plurality of applications by digital signal processing platforms. In the circuit-switched network 10 a circuit switch 16 connects the circuit-switched network-specific digital signal processing DSP platforms 14-1, 14-2, 14-3 to circuit-switched network-specific base stations 18-1, 18-2, 18-3 and/or to digital signal processing DSP platforms 14-6, 14-7, 14-8, ..., provided as gateway transcoders between the circuit-switched network 10 and the packet-switched network 12.

As shown in Fig. 3, in the packet-switched network a packet switch 18 connects the packet-switched network-specific digital signal processing platforms 14-4, 14-5, 14-6 to packet-switched network-specific base stations 20-1, 20-2, 20-3 and/or to the digital signal processing platforms 14-7, 14-8, 14-9, ..., provided as gateway transcoders between the circuit-switched network 10 and the packet-switched network 12.

As shown in Fig. 3, when digital signal processing platforms are used purely in the circuit-switched network 10 they are connected only to the circuit-switch 16 and implement applications which are typical circuit-switched network applications such as echo cancelling or transcoding for GSM, PDC or D-AMPS.

To the contrary, when digital signal processing platforms are solely used in the packet-switched network 12, they are connected only to the packet switch 18 and implement packet-switched network applications such as transcoding, data adaptation, soft handover and so forth.

Further, the digital signal processing platforms are used as gateway transcoders. They are connected to both the circuit switch 16 and the packet switch 18. Then, they are typically just used as gateway transcoders for, e.g., GSM, PDC, D-AMPS or W-CDMA. Gateway transcoders are especially needed together with packet based backbone BSSs is in the future. Another such example is a Voice over IP gateway.

Operatively, uncoded circuit-switched speech like PCM speech or data samples are transferred between the circuit switch 16 and the gateway transcoders implemented on the basis of the digital signal processing platforms 14-7, 14-8, 14-9, ..., as data streams consisting of several circuit-switched connections, e.g., up to for instance 512 PCM-connections of 64 kbit/s per platform.

Further, during operation, coded speech or data frames are transferred between the gateway transcoders on the basis of the digital signal processing platforms 14-7, 14-8, 14-9 and the packet switch 18. Here, the physical bandwidth should be high, e.g., 155 Mbit/s. Although the maximum average bandwidth used by every application is most likely much lower. However, the lower the average bandwidth of the application in comparison to the actual physical bandwidth is, the lower the transfer delays for the related data packets are, because they are sent in bursts with the physical bandwidth frequency. Also, the faster the data packets are sent through the lower the congestion delays are.

Considering both, circuit- and packet-switched data, if in gateway applications the maximum duplex payload bandwidth on the synchronous circuit-switched network side is 32 Mbit/s, the duplex bandwidth on the packet-switched side cannot be more than 8 Mbit/s since coding reduces the bandwidth need at least by a factor of 4 in a typical case. Therefore, only in case the digital signal processing platform is used in a pure packet-based environment the bandwidth can be higher in case the application complexity is sufficiently low.

E.g., if the digital signal processing platform possesses a processing power of 8 Gips and the average processing intensity required by the application running in the digital signal processing platform is below 80 instructions per bit, then the duplex payload bandwidth could be as high as 100 Mbit/s on the average. However, factors other than the processing power may also limit the bandwidth such as the available memory size and electrical power consumption in the digital signal processing platform.

In case the digital signal processing platforms 14-1, ..., 14-n implement different codecs such as GSM FR, EFR and HR codecs depending on overhead and efficiency of the implementations the Mips-requirements for these codecs including both coding and decoding are roughly below 5, 20, and 25 Mips per channel, respectively. Further, their duplex bandwidths are 80, 80, and 72 kbit/s per channel, respectively. For instance, with GSM FR or EFR 64 kbit/s for uncoded speech and 16 kbit/s for coded speech, which yields 80 kbit/s. Overall, this yields processing intensities of 62, 250 and 347 instructions per bit for GSM FR, EFR and HR codecs.

Still further, as shown in Fig. 3 different digital signal processing platforms may be connected in pools both in the circuit-switched network 10 and the packet-switched network 12 to save switch capacity in the circuit switch 16 and the packet switch 18. Also, using this approach, the number of gateway transcoders per node may be decreased.

Pooling of platforms saves switch capacity and decreases the number of transcoders per node compared to semipermanently connected platforms, because each base station port is not permanently connected to a transcoder port, but a transcoder port is seized, when a call is set up. The number of transcoders in a node is based on traffic analysis but it is typically much lower than the number of served base station ports. This is based on the fact that in practise all the base station ports are not seized at the same time, but only a certain maximum number of them needs concurrent access to transcoders.

Still further, signalling between a circuit-switched network and a packet-switched network can also be implemented into the gateway transcoders on the basis of the digital signal processing platform because the functionality of these platforms is controlled by downloaded embedded software and thus may be also programmed to take care of signalling data packets transferred between the circuit-switched network 10 (like SS7) and the packet-switched network 12 (like SIP).

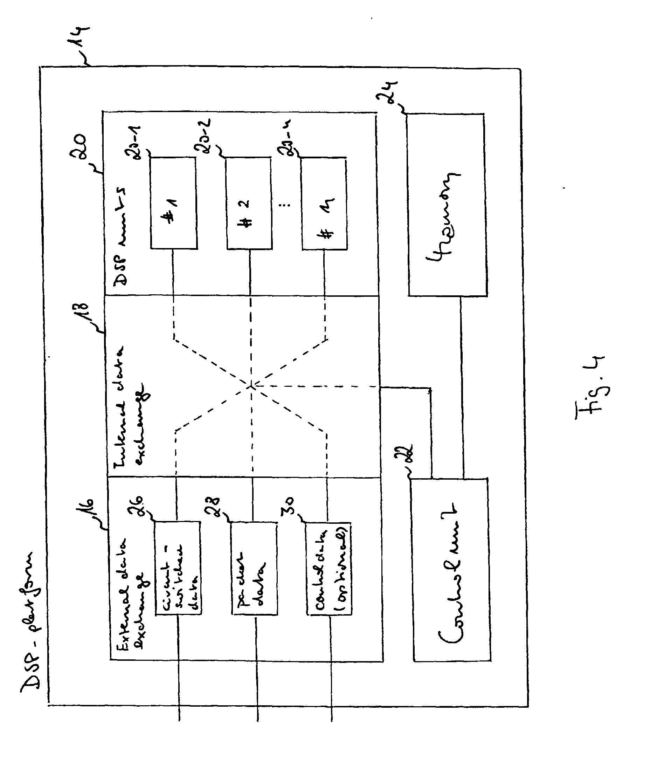

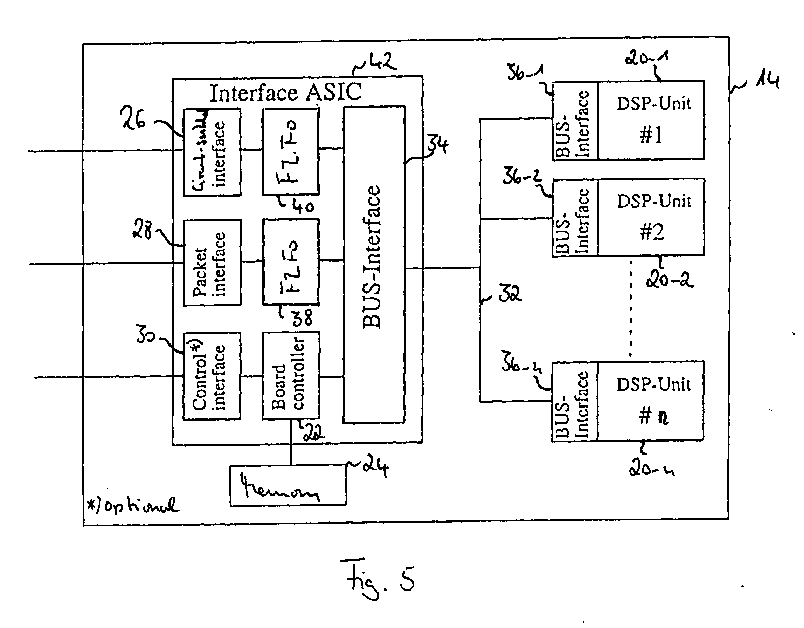

In the following, specific implementations of the digital signal processing platform will be illustrated with respect to the Figs. 4 to 8. Here, Fig. 4 shows the general block diagram for the digital signal processing platform while the further Figs. 5 to 8 refer to specific implementations thereof.

As shown in Fig. 4, each digital signal processing platform devides into an external data exchange unit 16, an internal data exchange unit 18, a digital signal processing unit 20, a control unit 22, and a memory 24, respectively. In the external data exchange unit 16, there is provided a platform interface for circuit-switched data 26, a platform interface for packet-switched data 28, and a platform interface for control data 30 which is optional as will be discussed in more detail herein below. In addition, the digital signal processing unit may comprise a plurality of signal processors 20-1, ..., 20-n, respectively.

Operatively, the platform interface for circuit-switched data 26 enables a bidirectional transfer of digital data between the outside of the digital signal processing platform 14 and the digital signal processing unit 20 and the platform interface for packet-switched data 28 enables a bidirectional transfer of digital data between the external side of the digital signal processing platform 14 and the digital signal processing unit 20. To implement the different operation alternatives discussed above with respect to Fig. 3 the control unit 22 is adapted to operate the digital signal processing platform 14 in a first mode to access both the circuit-switched network 10 and the packet-switched network 12. In a second mode the control unit 22 operates the digital signal processing platform 14 to access the circuit-switched network only. Finally, in a third mode the control unit 22 operates the digital signal processing platform 14 to access the packet-switched network, only.

Still further, in case the digital signal processing unit 20 is provided with a plurality of signal processors 20-1, 20-2, ..., 20-n, it is possible that at least two signal processors execute a plurality of different applications implementing gateway functionality, circuit-switched data processing functionality or packet-switched data processing functionality under control of the control unit 22.

Still further, the memory 24 as shown in Fig. 4 stores embedded digital signal processing program executed through the digital signal processing unit 20 during operation as gateway or to implement circuit-switched data-specific functionality and packet-switched data functionality, respectively. An important aspect of the present invention is that the memory 24 may be updated in a remote fashion, i.e. from the outside of the digital signal processing platform 14 in case such an update is necessary to adapt the digital signal processing platform 14 to new requirements. This is particularly useful in case the digital signal processing platform 14 is used, e.g., in switching parts of a digital cellular mobile radio system as being installed in rural environments. The same advantage is achieved with the platform interface for control data 30 provided for the exchange of externally supplied control data for the control unit 22.

Overall, the digital signal processing platform 14 is processed under control of the control unit 22 such that initially circuit-switched and/or packet-switched digital data is received at the digital signal processing platform. Then, this received digital data is converted either in the platform interface for circuit-switched data 26 or in the platform interface for packet-switched data 28 into an on-board specific data format. Using this on-board specific data format the internal data exchange unit 18 achieves the transfer of the received digital data to the digital signal processing unit 20-1, ..., 20-n which is then processed therein. Then, the processed digital data is transferred back via the internal data exchange unit 18 to the platform interface for circuit-switched or packet-switched data for reconversion of the data from the on-board data format to the circuit-switched data format and/or packet-switched data format. Finally, either the platform interface for circuit-switched data 26 or the platform interface for packet-switched data 28 transfers the reconverted on-board digital data to the circuit-switched network and/or the packet-switched network.

Another important aspect of the present invention is that the internal data exchange unit allows for implementation of a packet-based data bus to be discussed in more detail herein below and that the present invention also enables a variable setting of a packet-data size within the internal data exchange unit. Further, the same holds true for the packet size used in the platform interface for packet-switched data 28.

In conclusion, in case the traffic bandwidth allocated to the digital processing platform 14 is controlled through downloaded embedded software there arises the possibility to connect the digital signal processing platform together with different packet switches 18 shown in Fig. 3 and to save switch capacity through the use of different algorithms designed to use different amounts of digital signal processing capacity. In addition, the variable packet size on both the platform packet data interface and internal data exchange means may be optimally shaped to the specific application running on the digital signal processing platform 14, e.g., the coding of speech according to GSM HR, EFR and HR coding.

In the following, specific circuit diagrams for the different implementations of the digital signal processing platform 14 will be discussed with respect to the Figs. 5 to 8.

Fig. 5 shows a first block diagram for the implementation of the digital signal processing platform 14. Here, the units having the same function as those outlined above with respect to the Fig. 4 are denoted using the same reference numerals.

As shown in Fig. 5, the internal data exchange means 18 comprises a first duplex bus 32 that is connected to a first bus interface 34 and a bus interface 36 of the digital signal processing unit 20. In case the digital signal processing unit 20 is divided into a plurality of signal processors 20-1, 20-2, ..., 20-n, each of these signal processors 20-1, 20-2, ..., 20-n, is provided with its own bus inteface 36-1, 36-2, ..., 36-n, respectively. Typically, the first duplex bus 32 is an on-board high bandwidth packet-based bus enabling variable packet sizes. Also, the first bus interface 34 is used as bus arbitration master and the bus interface units 36-1, 36-2, ..., of the digital signal processors 20-1, 20-2, ..., 20-n are used as bus arbitration slaves.

As is also shown in Fig. 5, the first bus interface 34 is connected to the platform interface for circuit-switched data 26, the platform interface for packet-switched data 28 and the control unit 22. Also, a first FIFO memory 38 is provided between the platform interface for packet-switched data and the first bus interface 34 and a second FIFO memory 40 is provided between the platform interface for circuit-switched data 26 and the first bus interface 34.

According to the implementation shown in Fig. 5 the platform interface for circuit-switched data 26, the platform interface for packet-switched data 28, the platform interface for control data 30, the first bus interface 34, the control unit 22, the first FIFO memory 38 and the second FIFO memory 40 are integrated into an interface ASIC 42. However the same functionality can also be achieved with discrete functional components. This is also covered by this invention.

Operatively, the first bus interface 34 takes care of the arbitration of the first duplex bus 32. Also, the provision of the first FIFO memory 38 and the second FIFO memory 40 allows for the avoidance of traffic congestions in the bus interface 34.

The traffic congestions within the bus interface 34 can be minimized because data packets transferred via it can be "flushed" to FIFOs whether or not the final destination is ready to receive the packets at the moments. So FIFOs are used to filter temporary fluctuations in the internal traffic intensity.

Further, the on-board embedded software may control the first duplex bus 32 so that the digital signal processing platform is adapted to different versions of the platform interface for packet-switched data 28 and also different traffic bandwidths may be allocated on the platform interface for circuit-switched data 26. This facilitates the adaptation of the digital signal processing platform 14 to different applications and also the adaptation to different connections via the downloading of different embedded software onto the digital signal processing platform 14.

Still further, the platform interface for packet-switched data is handling the interface to the packet switch 18 shown in Fig. 3 and establishes the proper synchronization and conversion functions needed in adapting the external data packet traffic to the on-board packet-based data format. This adaptation function is also configured through the on-board software so that different physical as well as logical packet sizes are supported, as already outlined above. Typical examples are ATM - or internet data packets, but nevertheless the digital signal processing platform 14 can also be adapted to user-specific proprietary packet switches, e.g., Mini-Cell switches, if and when such are available.

As already outlined above, the configuration of the on-board packet data size is achieved through the embedded software and allows to minimize the drawbacks usually arising in gateway transcoders. In particular, especially if an ordinary ATM switch is used as packet switch 18 shown in Fig. 3 the size of physical data packets is 53 bytes with a payload of 48 bytes. However, this does not match the size of coded traffic frame, e.g., 40 bytes for the GSM full rate standard GSM FR. This usually increases the buffering delay in the transcoder if maximized use of payload is aimed at.

E.g., for the GSM full rate standard GSM FR according to the prior art approaches at least two frames are partially packed in a single ATM cell. This implies that the transmitter of a coded speech (like transcoder) is not always able to transmit the whole frame when it gets ready in the coder, but it has to wait for the next frame to get ready too in order to fill an ATM-cell. This causes an extra delay of at least 20 ms. In order to avoid data underrun the receiver of the ATM-cells must introduce an extra buffering delay.

To the contrary, if a one-to-one relationship between the standard ATM-cells and coded traffic frames is used, the extended buffering delay on the receiver side may be avoided, but a part of the transmission capacity is usually wasted since the payload of each ATM-cell must be padded by unused bytes.

One approach provided so far is to build a higher protocol layer on top of the ATM-cell stream which is referred to ATM-adaptation layer type AAL2. Here, a Mini-Cell concept is defined to pack data stream of a connection. One Mini-Cell can contain, e.g., all coded parameters of each 20 ms speech frame as payload. Then, several Mini-Cell streams may be allocated within an AAL2-stream and hereby transmission of unused octets within ATM-cells may be minimized. In order to utilize Mini-Cell concept an ATM-switching unit is no more so easy to define, since an ATM-cell stream and a Mini-Cell stream are not in a one-to-one relation. The basic switching unit is Mini-Cell instead of ATM-cell and Mini-Cell switching function shall be available somewhere in the packet data way.

Referring again to Fig. 5 it is, e.g., the bus interface 34 in the digital signal processing platform 14 that may handle the multiplexing/demultiplexing of Mini-Cells according to the AAL2 standard. Nevertheless, if the increased delay or unused payload is not considered a problem, solutions using an ordinary ATM-switch as known from the state of the art may also easily be adapted to by the digital signal processing platform 14 according to the invention.

Further, the platform interface for circuit-switched digital data connects to the circuit switch 16 of the circuit-switched network as shown in Fig. 3. It again contains proper synchronization and conversion functions needed in adapting the synchronized circuit-switched traffic to the on-board asynchronous proprietary data format. Here, the control system of the circuit switch 16 shown in Fig. 3 and the control unit 22 using embedded software stored in the memory 24 together can control the number of, e.g., 64 kbit/s PCM connections in steps of i x 128, where i = 1, ..., 4.

Still further, the platform interface for control data 30 is handling the interfacing for external proprietory control data. It is connected to the control unit 22 which is a microprocessor core capable of handling the control data information required for the applications implemented on the digital signal processing platform 14. The platform interface for control data 30 can be based, e.g., on the Ethernet/IP connection. In this case the external system control controlling the digital signal processing platform 14 is supposed to be located in the circuit-switched network.

As can also be seen in Fig. 5, the control signalling can be routed between the packet switch 18 shown in Fig. 3 and the control unit 22 via the platform interface for packet-switched data 28 and the first bus interface 34 through using dedicated control signalling data packets and proper packet addressing. In this case the external system control, which controls the digital signal processing platform 14, is supposed to be located in the packet-switched network 12 shown in Fig. 3.

Further, accessing the platform interface for control data 30 is performed by the control unit 22 which also accesses the digital signal processing unit 20 with its specific signal processors 20-1, ..., 20-n using the on-board packet-based data format. This, too, is implemented with embedded software which is downloaded from the outside of the digital signal processing platform 14.

The applications executed in the digital signal processing means 20 are fully determined by the embedded software downloaded to the memory 24 of the digital signal processing platform. One example for the implementation of this memory 24 would be a non-volatile program storage FPROM which is controlled through the control unit 22. Further, also the downloading of new software is handled through the control unit 22 and performed either via the platform interface for control data 30 or via the platform interface for packet-switched data 28 which ever is used between the external system control means and the digital signal processing platform 14.

In case the digital signal processing means 20 or the related signal processors 20-1, ..., 20-n implement a gateway transcoder, the function is achieved through the embedded software adapted to receive/transmit coded speech or data frames via the platform interface for packet-switched data 28 and also to receive/transmit uncoded PCM samples via the platform interface for circuit-switched digital data 26. As outlined above, the access to the platform interfaces is handled using on-board optimized proprietory packet-based data formats for the first duplex bus 32. E.g., coded speech frames of GSM FR, EFR or HR codecs may be packed into the on-board packet-based data format, e.g., Mini-Cells, and transferred between the digital signal processing unit 20 and the platform interface for packet-switched data 28. One frame would occupy the payload of a single data packet and a traffic connection would be allocated on top of a packet stream, e.g., Mini-Cell stream in AAL2, which would yield a minimum extra buffering delay.

Using this approach, just the transmission delay and the jitter because of varying traffic load must be taken into account by the buffering at the receiver side, but the resulting delay is probably much shorter than the transmission time of coded traffic frames in ordinary circuit-switched base station parts, which is typically 20 ms.

Theoretically, if the payload bandwidth reserved for packet-based transmission of speech is identical to the bandwidth of a synchronous circuit-switched PCM line and speech transmission is prioritized over other traffic types on the same line, then the delay of a speech packet can reach 20 ms first when all channels are seized and all are speaking at the same time, i.e. the whole bandwidth for speech is allocated. Nevertheless, this is equivalent to a congestion state at traditional circuit switched PCM lines and in this case it can be said that the transmission delay of a packet is always less than or at most equal to the transmission delay of a frame on a synchronous PCM line, if the payload bandwidths are equal.

Referring again to Fig. 5, uncoded circuit-switched data samples are buffered in the second FIFO memory 40. Here, circuit-switched data samples are received/transmitted from/to the circuit switch 16 shown in Fig. 3 synchronously for PCM-line with one sample/125 µs for each 64 kbit/s PCM connection accessed by the digital signal processing platform 14.

One possibility to convert uncoded circuit switched data between the platform interface for circuit-switched data 26 and the first duplex bus 32 is to use circuit emulation. Here all timeslots for one circuit-switched frame structure per 125 µs is packed/unpacked to/from a proprietary on-board data packet, which is transmitted/received to/from digital signal processing means 20. If the digital signal processing means 20 consists of several DSP-units 20-1, ..., 20-n, then one circit switched frame structure can be split to several packets destined to/originated from corresponding DSP-units 20-1, ..., 20-n. The proper ordering and time integrity of time slots within a circuit switched frame structure must be kept by the first bus interface 34.

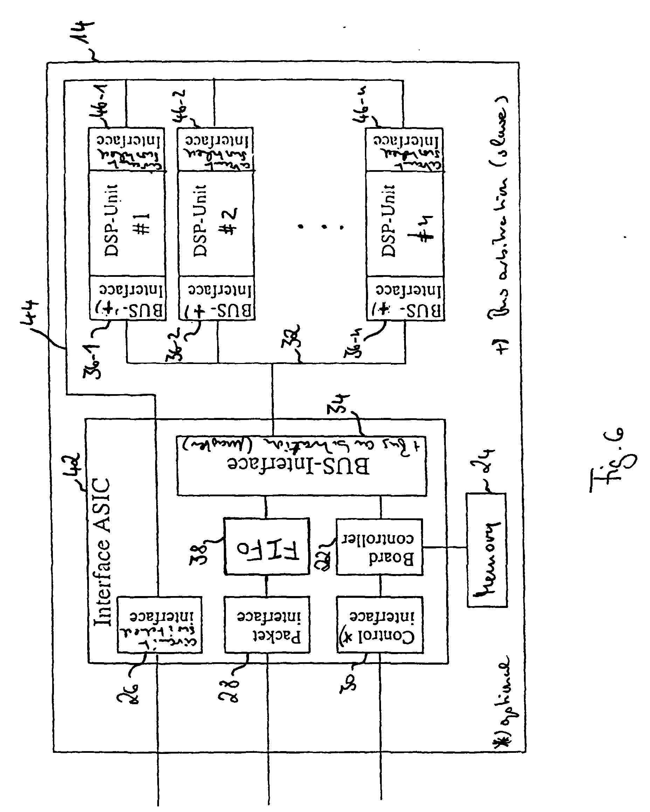

Fig. 6 illustrates a block diagram of a digital signal processing platform 14 having a separate synchronous bus for the transfer of circuit-switched digital data. Here, functional units being identical to those previously discussed with respect to Fig. 4 and 5, respectively, are denoted using the same reference numerals and description thereof will be omitted.

As shown in Fig. 6, there is provided a second duplex bus 44 between the platform interface for circuit-switched digital data 26 and the digital signal processing unit 20. Here, each signal processor 20-1, ..., 20-n of the digital signal processing unit 20 is provided with a dedicated processor interface for circuit-switched data 46-1, ..., 46-n, respectively. Operatively, in the digital signal processing platform shown in Fig. 6 the bridging between the synchronous circuit-switched data traffic, e.g., PCM-traffic, and the asynchronous proprietary data packets is thus implemented in the digital signal processing units 20-1, ..., 20-n under the control of their programs. Further, in this case the buffering of circuit-switched data samples being described with respect to Fig. 5 and the second FIFO memory 14 shown therein, too, is handled in the processor interfaces for circuit-switched data packets 46-1, ..., 46-n.

Compared to Fig. 5 the conversion between the platform interface for circuit-switched data 26 and the on-board proprietary packet data format on the first duplex bus 32 is avoided in the implementation illustrated in Fig. 6, which makes the function within Interface ASIC 42 simpler.

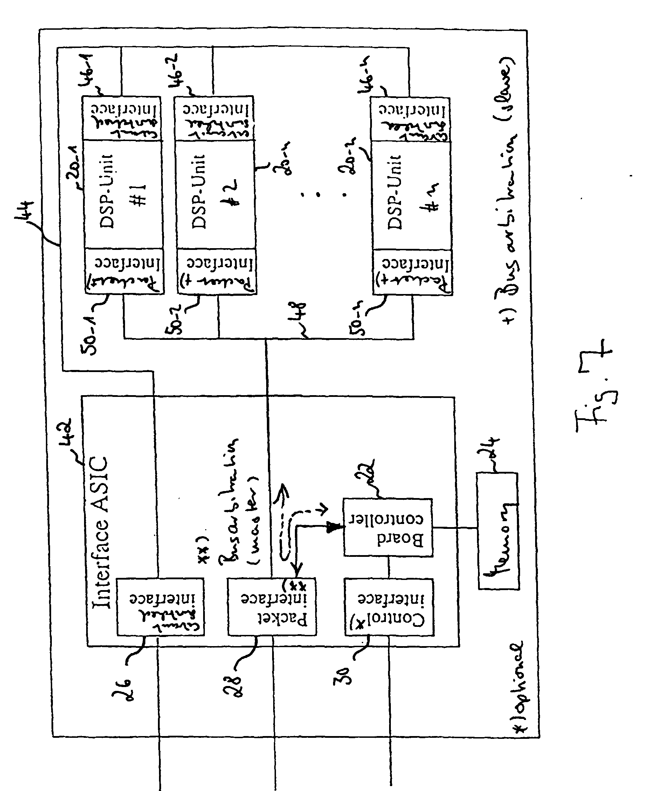

A further modification of the previously discussed digital signal processing platform is shown in Fig. 7. Here, again previously discussed functional units are denoted using the same reference numerals and description thereof will be omitted.

The digital signal processing platform shown in Fig. 7 differs over the previously discussed digital signal processing platforms in that here the dedicated packet-based data format implementing duplex bus 48 is directly provided between the platform interface for packet-switched data 28 and packet-switched interface units 50-1, ..., 50-n of the signal processors 20-1, ..., 20-n of the digital signal processing means.

Operatively, under control of the control unit 22 the platform interface for packet-switched data 28 now is used as bus arbitration master and the packet-switched interface units 50-1, ..., 50-n of the signal processors 20-1, ..., 20-n are used as bus arbitration slaves. Further, control of the processing in the digital signal processing unit 20 is executed by the control unit 22 via the platform interface for packet-switched data.

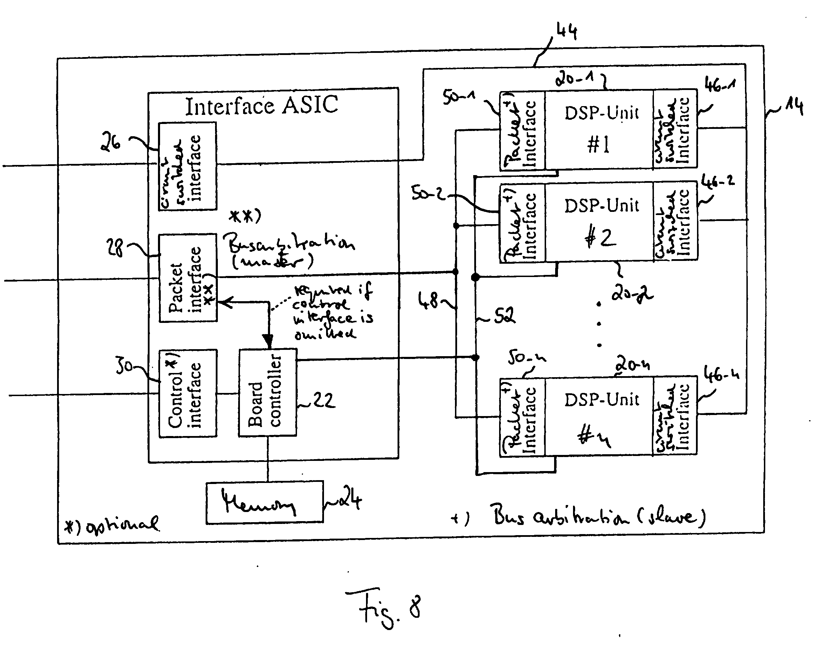

Fig. 8 shows a modification of the digital signal processing platform shown in Fig. 7. Here, too, functional units previously discussed are denoted using the same reference numerals and description thereof will be omitted.

The digital signal processing platform 14 shown in Fig. 8 differs over the previously shown digital signal processing platform 14 shown in Fig. 7 in that there is provided a dedicated duplex bus 52 for the exchange of data between the signal processors 20-1, ..., 20-n of the digital signal processing unit 20 and the control unit 22. Here, a link between the platform interfaces for packet-switched data 28 and the control unit 22 is required if the platform interface for control data 30 is omitted, and external control signalling is accessing the digital signal processing platform 14 via the platform interface for packet switched data 28.

With the above flexibilities the digital signal processing platform 14 may be adapted to different applications with varying digital signal processing capacity requirements without wasting too much switching capacity of either circuit switch 16 of the circuit-switched network 10 or the packet switch 18 of the packet-switched network 12, respectively.

### Terminology and Abbreviations

- AAL2: ATM Adaptation Layer type 2
- ASIC: Application Specific Integrated Circuit
- ATM: Asynchronous Transfer Mode
- BSS: Base Station System (BTS:s and BSC together)
- BSC: Base Station Controller
- BTS: Base Transceiver Station
- CDMA: Code Division Multiple Access
- D-AMPS: Digital American Mobile Phone System
- DSP: Digital Signal Processing or Digital Signal Processor
- EFR: Enhanced Full Rate
- FIFO: First In First Out data buffer memory
- FPROM: Flash Programmable Read Only Memory
- FR: Full Rate
- Gips: Giga instructions per second
- GSM: Global System for Mobile communication
- HR: Half Rate
- IP: Internet Protcol
- MIPS: Million instructions per second
- MSC: Mobile Switching Centre
- PDC: Personal Digital Cellular system (Japanese mobile phone system)
- PCM: Pulse Code Modulation
- PSTN: Public Switched Telephony Network
- SIP: Session Initiation Protocol
- SS7: Signalling System Nr. 7
- STM: Synchronous Transfer Mode
- TDMA: Time Division Multiple Access
- WCS: Wide band Cellular System
- W-CDMA: Wide band CDMA

## Claims

1. Digital signal processing platform for a digital cellular mobile radio system, comprising:
a) at least one digital signal processing means (20-1, ..., 20-n) adapted to process digital data;
b) internal data exchange means (18) adapted to
b1) a bidirectional transfer of digital data between the digital signal processing means (20-1, ..., 20-n) and a circuit-switched platform interface means (26) provided for the exchange of circuit-switched digital data with the digital signal processing platform (14), and
b2) a bidirectional transfer of digital data between the digital signal processing means (20-1, ..., 20-n) and a packet-switched platform interface means (28) provided for the exchange of packet-switched digital data with the digital signal processing platform (14); and
c) control means (22) adapted to operate the digital signal processing platform (14) in a first mode to access both a circuit-switched network (10) and a packet-switched network (12), or to operate the digital signal processing platform (14) in a second mode to access the circuit-switched network (10) only, or to operate the digital signal processing platform (14) in a third mode to access the packet-switched network (12), only.

2. Digital signal processing platform according to claim 1, ***characterized in that*** at least two digital signal processing means (20-1, ..., 20-n) execute a plurality of gateway mode, circuit-switched data mode, or packet-switched data mode applications concurrently under control of the control means (22).

3. Digital signal processing platform according to claim 1 or 2, ***characterized in that*** it further comprises a memory means (24) storing embedded digital signal processing programs executed by the digital signal processing means (20-1, ..., 20-n) in the gateway mode, circuit-switched data mode, and/or packet-switched data mode, and that embedded digital signal processing programs are updated in the memory means (24) under control of the control means (22) on remote demand.

4. Digital signal processing platform according to one of the claims 1 to 3, ***characterized in that*** it further comprises a control platform interface means (30) provided for the exchange of externally supplied control data for the control means (22).

5. Digital signal processing platform according to one of the claims 1 to 4, ***characterized in that*** the internal data exchange means (18) comprises a first duplex bus means (32) adapted to a bidirectional transfer of digital data between a first bus interface (34) connected at least to the packet-switched platform interface means (28) and a second bus interface means (36-1, ..., 36-n) of the digital signal processing means (20-1, ..., 20-n).

6. Digital signal processing platform according to claim 5, ***characterized in that*** the first duplex bus means (32) is an on-board high bandwidth packet-based bus with variable packet sizes.

7. Digital signal processing platform according to one of the claims 1 to 6, ***characterized in that*** the packet-switched platform interface means (28) is adapted to variable packet sizes.

8. Digital signal processing platform according to one of the claims 5 to 7, ***characterized in that*** the first bus interface (34) is used as bus arbitration master and that the second bus interface means (36-1, ..., 36-n) is used as bus arbitration slave.

9. Digital signal processing platform according to one of the claims 5 to 8, ***characterized in that*** the first bus interface (34) is further connected to the circuit-switched platform interface means (26) and the control means (22), respectively.

10. Digital signal processing platform according to one of the claims 5 to 9, ***characterized in that*** it further comprises a first buffer memory (38) connected to the first bus interface means (34) and to the packet-switched platform interface means (28).

11. Digital signal processing platform according to claim 9 or 10, ***characterized in that*** it further comprises a second buffer memory (40) connected to the first bus interface means (34) and the circuit-switched platform interface means (26).

12. Digital signal processing platform according to one of the claims 5 to 8, ***characterized in that*** the internal data exchange means (18) further comprises a second duplex bus means (44) adapted to a bidirectional transfer of digital data between the circuit-switched platform interface means (26) and a first circuit-switched interface means (46-1, ..., 46-n) of the digital signal processing means (20-1, ... 20-n).

13. Digital signal processing platform according to claim 12, ***characterized in that*** the second duplex bus means (44) is a synchronous data bus.

14. Digital signal processing platform according to claim 12 or 13, ***characterized in that*** it comprises a third buffer memory (38) connected to the first bus interface means (34) and to the packet-switched platform interface means (28).

15. Digital signal processing platform according to one of the claims 1 to 4 and claim 7 back-referenced to claim 1, ***characterized in that*** the internal data exchange means (18) comprises a third duplex bus means (48) adapted to a bidirectional transfer of digital data between the packet-switched platform interface means (28) and a packet-switched interface means (50-1, ..., 50-n) of the digital signal processing means (20-1, ..., 20-n).

16. Digital signal processing platform according to claim 15, ***characterized in that*** under control of the control means (22) the packet-switched platform interface means (28) is used as bus arbitration master and the packet-switched interface means (50-1, ..., 50-n) is used as bus arbitration slave.

17. Digital signal processing platform according to claim 15 or 16, ***characterized in that*** the internal data exchange means (18) further comprises a fourth duplex bus means (44) adapted to a bidirectional transfer of digital data between the circuit-switched platform interface means (26) and a second circuit-switched interface means (46-1, ..., 46-n) of the digital signal processing means (20-1, ..., 20-n).

18. Digital signal processing platform according to claim 17, ***characterized in that*** the internal data exchange means (18) further comprises a fifth duplex bus means (52) adapted to a bidirectional transfer of control data between the control means (22) and the digital signal processing means (20-1, ..., 20-n).

19. Digital signal processing method for a digital cellular mobile radio system, comprising the steps:
a) receiving circuit-switched digital data and/or packet-switched digital data at a digital signal processing platform (14);
b) converting the received circuit-switched digital data in a circuit-switched platform interface means (26) into an on-board data format and/or converting the received packet-switched digital data in a packet-switched platform interface means (28) into the on-board data format;
c) transferring digital data in the on-board data format to at least one digital signal processing means (20-1, ..., 20-n) via at least one on-board data bus (18);
d) concurrent processing of the transferred digital data in the digital signal processing means (20-1, ..., 20-n),
e) transferring processed digital data via at the least one on-board data bus (18) to the circuit-switched interface means (26) and/or packet-switched interface means (28),
f) re-converting the digital data in the on-board data format in circuit-switched digital data in the circuit-switched platform interface means (26) and/or packet-switched digital data in the packet-switched platform interface means (28), and
g) transmitting the re-converted digital data to a circuit-switched network and/or packet-switched network, respectively.

20. Digital signal processing method according to claim 19, ***characterized in that*** the on-board data bus (18) is a packed-based data bus and that step c) comprises the variable setting of a packet data size for packet switching via the on-board packed-based data bus (18).

21. Digital signal processing method according to claim 19 or 20, ***characterized in that*** it further comprises a step to down-load programs for processing of the transferred digital data in the digital signal processing means (20-1, ..., 20-n) to the digital signal processing platform (14).

22. Digital signal processing method according to one of the claims 19 to 21, ***characterized in that*** the digital signal processing means (20-1, ..., 20-n) is operated in a gateway mode, in a circuit-switched data mode, and/or a packet-switched data mode, respectively.

23. Digital signal processing method according to one of the claims 19 to 22, ***characterized in that*** the external packet size accessed via the platform interface for packet-switched data is variable and controlled by the embedded on-board program for the digital signal processing platform (14).

24. Digital signal processing method according to one of the claims 19 to 23, ***characterized in that*** the number of, e.g., 64 kbit/s channels accessed via the platform interface for circuit-switched data is variable and controlled by the embedded on-board program for the digital signal progessing platform (14).
